# EUROPÄISCHE PATENTSCHRIFT

(11) **EP 0 611 254 B1**
(45) Veröffentlichungstag und Bekanntmachung des Hinweises auf die Patenterteilung: **28.10.1998**
(21) Anmeldenummer: 94810054.0
(22) Anmeldetag: 02.02.1994
(51) Int. Cl.: C02F 3/30

(54) **Vorrichtung zur Unterteilung flüssigkeitsgefüllter Becken von Klärwerken**
Device for the subdivision of liquid-filled tanks of sewage treatment works
Dispositif pour subdiviser des bassins remplis de liquide dans les stations d'épuration d'eau usée

(30) Priorität: 02.02.1993 CH 298/93
(43) Veröffentlichungstag der Anmeldung: 17.08.1994
(73) Patentinhaber: ARNOLD AG, CH-6105 Schachen (CH)
(72) Erfinder: Schwaller, Jürg, CH-6018 Buttisholz (CH)
(74) Vertreter: Arato, Laszlo

(56) Entgegenhaltungen:
- EP-A- 0 073 266
- EP-A- 0 127 769
- WO-A-92/00920
- FR-A- 2 159 680

## Beschreibung

Die Erfindung betrifft eine Vorrichtung gemäss dem Anspruch 1.

Ende 1990 soll etwa 90 % der Bevölkerung von Westeuropa an die Kanalisation von biologischen Kläranlagen angeschlossen worden sein. Da man zunehmend der Ansicht ist, dass die nach der biologischen Reinigung verbleibenden BSB-aktiven Stoffe, die Phoshate, zur gefürchteten Eutrophierung der Gewässer führen, ist man bestrebt, mit einer zusätzlichen chemischen Stufe der Reinigung, durch die Zugabe von selektiven Flockungsmitteln, meist Eisen- oder Aluminiumsalzen, die Kolloide und die gelösten organischen Substanzen aus dem Abwasser zu entfernen. Zum Schutz der Volksgesundheit wird ferner, zur Verminderung der Nitrate des biologisch geklärten Wassers, in eine Stufe der Denitrifikation, angestrebt. Zur Reduktion der Nitrate dienen spezielle Denitrifikationsbakterien, die den bei der Reduktion der Nitrate frei werdenden Sauerstoff, beim Abbau der organischen Nährstoffe veratmen.
Für die Erweiterung bestehender Klärwerke fehlt meist der Platz oder das Geld, so dass die Lösung der verbesserten Prozessführung in der Ausscheidung von Funktionszellen aus dem vorhandenen Beckenvolumen zu suchen war.

Die Lösungen beim Stand der Technik; sind massive Bauten aus armiertem Beton sowie Reversbauten aus Holz, Metallgeflecht und dergleichen. Ihre Anwendung ist umständlich und aufwendig. Hier will die Erfindung helfen.

Zur Lösung der Aufgabe wird daher eine Vorrichtung gemäss dem Anspruch 1 vorgeschlagen.

Die durch die Erfindung erreichten Vorteile sind, nebst der massiven Reduktion der Beschaffungskosten, dass zum Ein- und Ausbau der Vorrichtung keine nennenswerte Änderungen am Baukörper notwendig sind, und dass die Montage gegenüber den Massnahmen des Standes der Technik äusserst einfach ist. Da die Elemente der Erfindung sich zum Ausbau eines Baukastensystems eignen, ist die Erfindung sowohl für punktuelle, wie für allgemein geltende Lösungen geeignet.
Die Vorteile der Erfindung ist ferner, dass ihr Einsatz ohne Stillegung und ohne Unterbruch des Klärbetriebes möglich ist. Aus diesem Grunde ist das System ideal für die versuchsweise Optimierung einer Anlage. Dank dieser Eigenschaft wird die laufende Optimierung der Klärleistung bestehender Anlagen je nach Jahreszeit möglich.
Dieser Vorteil der Erfindung ist für den Gewässersschutz so wichtig, dass sie der Erörterung bedarf; wenn nämlich die Winterkälte die Leistung der Mikroorganismen reduziert, verdoppelt sich etwa das Denitrifikationsvolumen der Anlage.
Die Temperatur ist für die Reaktionsgeschwindigkeit von belebten und unbelebten chemischen Prozessen unterschiedlich. Bei rein chemischen Vorgängen die Faustregel gilt, dass sich bei der Reduktion von 10° Kelvin die Reaktionsgeschwindigkeit halbiert (dies ergiebt einen exponentiellen Verlauf). Bei Bakterien gilt ein unterer Grenzwert, und die Reaktionsgeschwindigkeit konvergiert sehr rasch gegen Null.
Diese Nitratlast, wird zur Zeit üblicherweise dem Vorfluter überlassen. Dank der Erfindung wird die Ausscheidung einer Zelle des Belebungsbeckens, für die Denitrifikation möglich. In dieser Zelle, die in der Durchflussrichtung nach der Belebung folgt, vermehren sich solche Bakterien ungehindert, die in der Belebungsbecken, wegen des dort notwendigem Sauerstoffreichtum nicht gedeihen. Da solche Anaerobien auf die Aufnahme des freiwerdenden Sauerstoffs bei der Reduktion der Nitrate gerichtet sind, finden sie in der Sauerstoffarmut und dem reichen Nährstoffangebot der Zelle ideale Lebensbedingungen. Entsprechend der anfallenden Nitrate regelt sich die Population und damit die Erledigung der Denitrifikation vom Selbst.
Ähnlich dieser Zelle, ist, je nach Bedarf beispielsweise die Ausscheidung einer Zelle für das chemische Ausfällen der Phosphate möglich.
Mit den vorgeschlagenen Vorrichtungen ist generell die Leitung und somit die Optimierung der hydraulischen Strömung des Beckens möglich. Die Erfindung lässt die Herstellung von ebenen Trennwänden zu.

Im folgenden wird die Erfindung anhand von Ausführungsbeispielen, mit Bezug auf die beiliegenden Zeichnungen, näher erläutert. Es zeigt:
- Fig. 1: die drei Ansichten eines Flächengebildes als Vorrichtung zur intermittierenden Unterteilung eines Beckens,
- Fig. 2: das Detail einer Alternative der Ausführung des Flächengebides der Fig.1,
- Fig. 3: die Vorderansicht der Vorrichtung in einem Becken mit dem Flächengebilde der Fig.1,

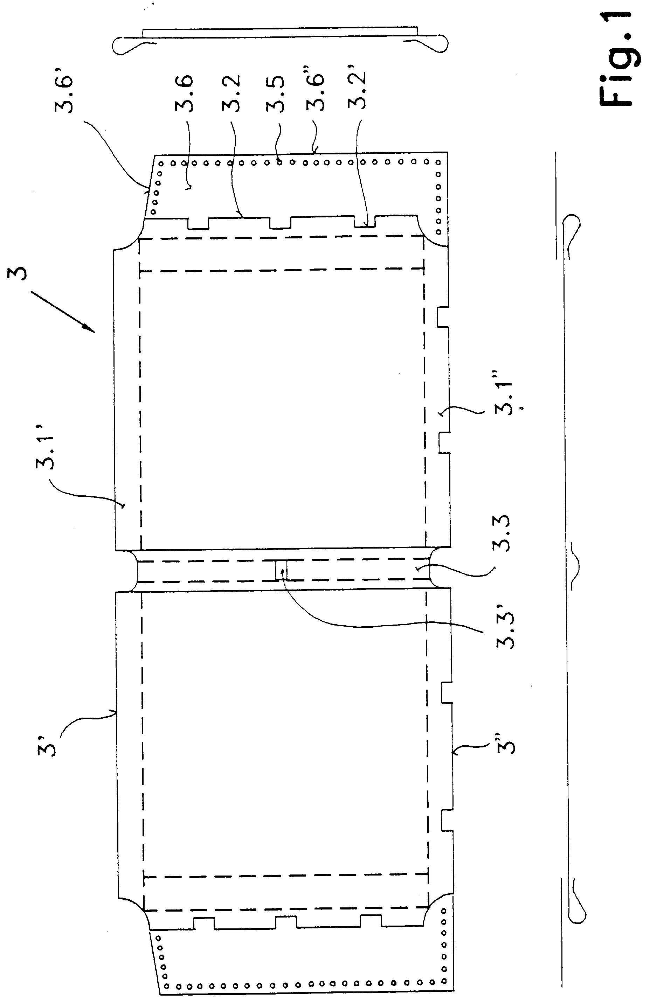

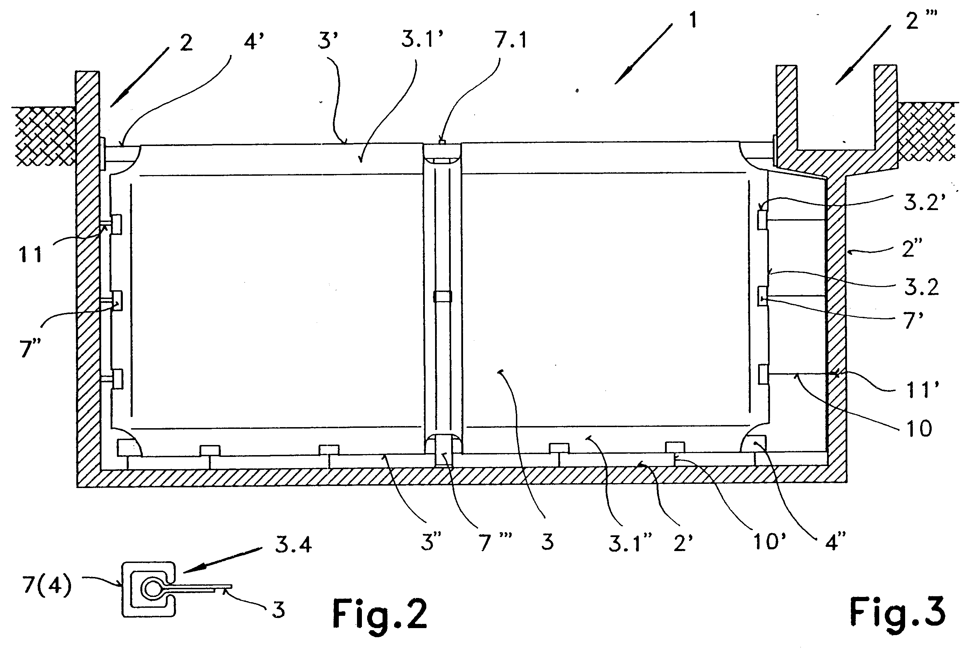

Die Fig. 1 zeigt die drei Ansichten eines ausgelegten, segelartigen, Flächengebildes aus einem biegeschlaffen Stoff, wie sie für die vorgeschlagene Vorrichtung, beispielsweise zur Ausscheidung einer Zelle in einem Klärbecken, verwendet werden kann. Dieses Flächengebilde ist glatt, segeltuchartig und wasserundurchlässig, und wird, in Anlehnung an die Terminologie der Schiffahrt, Persenning 3 genannt. Dabei steht die Wasserundurchlässigkeit für das Mass der Dichtheit der Persenning 3. Die Dichtheit der Persenning 3, ist nicht wegen der vermeintlichen Dichtheit der Zelle von Bedeutung, sondern wegen der Beschaffenheit der Oberfläche, die idealerweise so kompakt, und so glatt ist, dass die Mikroorganismen an ihr keinen Halt finden.
Solche Eigenschaften weisen beispielsweise thermoplastbeschichteten Bautextilien auf, die sich als wetterfeste, zeltartig gespannte Bedachungen und Tuchbauten, oder als Traglufthallen bewährt haben. Damit die Persenning 3 trommelfellartig gespannt werden kann, weisen die Ränder 3',3'',3''' Mittel für die Krafteinleitung 3.1, 3.2, 3.3, 3.4, 3.5 in der Form von Balkentaschen 3.1', 3.1'' und Masttaschen 3.2 auf, die gemäss Figur 3 zur Aufnahme der Balken 4' und 4'' der Masten 7', 7'' dienen. Die Persenning 3 des Ausführungsbeispiels ist mit einem Hohlsaum 3.3, der zur Aufnahme des Mastes 7''' dient, unterteilt. An dieser Stelle ist die Fläche der Persenning 3 sektionsweise, je nach Bedarf, erweiterbar. Um die Vorrichtung 1 gegen das Auskippen zu sichern, weist der Mast 7''' seitliche Stützen oder Verspannungen auf, die durch das Fenster 3.3' des Hohlsaumes 3.3 greifen. Für die sektionsweise Erweiterung können verschnürbare Ösen 3.5, dienen, wie an den Rändern 3.6', 3.6'' des Dichtlappens 3.6 gezeigt sind, die mit nichtgezeigten, in die Beckenwand 2'' oder den Beckenboden 2' eingelassenen Verbindungsmitteln, beispielsweise Augenschrauben, verschnürt respektive verbindbar sind. Solche Dichtlappen 3.6 können, je nach Bedarf, überall an der Persenning 3, angeschweisst, angeknüpft oder angeschnürt werden. Bei der Abdichtung der Vorrichtung zur Unterteilung 1 bleibt zu beachten, dass die Persenning 3 seine Umgebung gegenüber immer ausreichend Öffnungen für den Ausgleich des hydrostatischen Druckes hat, damit die Persenning 3 und die Vorrichtung zur Unterteilung 1 statisch stets unbeansprucht bleibt. Mit der Erfüllung dieser Forderung wird zugleich, die für die Funktion der Zelle unerlässliche, hindernisfreie Durchströmung gesichert.
Einen Dichtlappen, der für die örtliche Anpassung der Vorrichtung 1 an ein Becken 2 mit Zulaufrinne 2''' dient, zeigt die Figur 3. Mit den Verankerungen 11 ist der Mast 7'' am Becken 2 festgemacht. Damit die Persenning 3 trommelfellartig gespannt werden kann, ist der Mast 7' und der Balken 4'' mit verzurrbaren Spannmitteln 10 und 10'an die Anker 11' gebunden. Um die Verteilung der Spannung in der Persenning 3 gleichmässig zu gestalten, und die Nachspannung vom Trockenen aus vornehmen zu können, wird der Einsatz von Seilmaschinen vorgeschlagen. Dazu wird beispielsweise links und rechts, mit Ausnahme der am tiefsten liegenden Aussparung 3.2' welche fest mit dem betreffenden Anker 11' verbunden ist, jeweils die Masttaschen 3.2 am Mast 7' an die Anker 11' der Beckenwand 2'', durch nicht dargestellte Umlenkrollen und ein Seil oder Gurt an Stelle des Spannmittels 10, an der Stelle der tiefst liegenden Aussparung 3.2' am Mast 7' nebst nichtgezeigten Umlenkrollen und einer Winde am äusseren Kontur der Zulaufrinne 2'''respektive am oberen Beckenrand befestigt.

Dazu wird an den Seiten, jeweils vom tiefsten Anker 11' ein Seil oder Gurt an Stelle der Spannmittel 10 durch nicht dargestellte Umlenkrollen zwischen den Ankern 11' und durch die Masttaschen 3.2 an den Mast 7' nach oben an eine auf dem Beckenrand montierte Winde geführt, mit welcher die ganze Seite der Persenning 3 nachgespannt werden kann.
Damit die Persenning 3 trommelfellartig gespannt werden kann, können die Ränder 3',3'',3''' Mittel für die Krafteinleitung 3.4 in der Form von Liekverbindungen 3.4 aufweisen, und die Masten 7 und/oder der Balken 4 für die Aufnahme der Liekverbindung 3.4 gemäss Figur 2 nutartig gestaltet sein.
Wenn die Vorrichtung zur Unterteilung 1, entsprechend den Figuren 1 und 3, an den seitlichen Rändern 3.2 mit Liekverbindungen 3.4 und gemäss Figur 2 mit passenden Masten 7 und einem beschwerten Balken 4'' ausgerüstet wird, und der Mast 7''' gegen das Auskippen mit den Seilen 8',8'' der Figur 4, vom oberen Rand des Beckens 2 gesichert wird, kann der Einsatz oder die Entnahme der Vorrichtung zur Unterteilung 1 eines Beckens 2 auch im gefüllten Zustand erfolgen.
Bei dieser Ausführung wird die senkrechte Membranspannung in der Persenning 3 durch die Schwerkraft erzeugt. Für die Erzeugung der wagrechten Komponente kann der Mast 7 zur Beckenwand 2'', auf die offenbarte Art, mit Hilfe einer Seilmaschine, verzurrt werden.

Wenn die Vorrichtung zur Unterteilung 1 entsprechend den Figuren 1 und 3 an den seitlichen Rändern 3.2 mit Liekverbindungen 3.4 und gemäss Figur 2 mit passenden Masten 7 und einen beschwerten Balken 4'' ausgerüstet und der Stützmast 7''' gegen das Auskippen mit Seilen vom oberen Rand des Beckens 2 gesichert wird, kann der Einsatz, oder die Entnahme, der Vorrichtung zur Unterteilung 1 eines Beckens 2, auch im gefüllten Zustand erfolgen. Auch bei diese Ausführung wird die senkrechte Membranspannung der Persenning 3 durch die Schwerkraft erzeugt. Für die Erzeugung der wagrechten Komponente kann der Mast 7 zur Beckenwand 2'' beispielsweise mit Hilfe einer Seilmaschine auf die bereits offenbarte Art verzurrt werden.

## Patentansprüche

1. Vorrichtung bestehend aus einem Klärbecken und eine Trennwand, die das Klärbecken in zwei Zellen unterteilt, dadurch gekennzeichnet dass die Trennwand aus mindestens einer trommelfellartig gespannten, ebenen Persenning (3) und am Rand der Persening angreifen den Mitteln besteht, und dass die Ränder der Persening mindestens teilweise Dichtlappen (3.6) aufweisen.

2. Vorrichtung nach Anspruch 1 dadurch gekennzeichnet, dass der Rand (3',3'') der Persenning (3) mit Balkentaschen (3.1',3.1'') und der Rand (3''') der Persenning (3) mit einer Masttasche (3.2) versehen ist.

3. Vorrichtung nach Anspruch 1 dadurch gekennzeichnet, dass die Balkentaschen (3.1', 3.1'') für die Aufnahme der Balken (4', 4'') und die Masttaschen (3.2) für die Aufnahme von Masten (7) dienen und dass in den Balken- (3.1', 3.1'') und Masttaschen (3.2) für die Anschlüsse der Spannmittel (10) Aussparungen vorgesehen sind.

4. Vorrichtung nach Anspruch 1 dadurch gekennzeichnet, dass die Rändern der Dichtlappen (3.6) mit verschnürbaren Ösen (3.5) bestückt sind.

5. Vorrichtung nach Anspruch 1 dadurch gekennzeichnet, dass die Persenning (3) mindestens einmal unterteilt ist und mindestens einen Hohlsaum 3.3 und in dem Hohlsaum 3.3 einen Träger (6) aufweist.

6. Vorrichtung nach den Ansprüchen 1 bis 5 dadurch gekennzeichnet, dass das Balken (4') an seinen Enden abgestützt ist, und der Balken (4'') zum Beckenboden (2') und der Mast (7) zur Beckenwand (2'') mit Spannmitteln (10) und Spannankern (11) verspannt sind.

7. Vorrichtung nach den Anspüchen 1 bis 5 dadurch gekennzeichnet, dass die Ränder (3',3'',3''') der Persenning (3) mit Liekverbindung 3.4 und die Balken (4), der Täger (6) und der Mast (7) für die Aufnahme der Liekverbindung (3.4) mit Nuten versehen sind.

8. Vorrichtung nach den Ansprüchen 1 bis 5 dadurch gekennzeichnet, dass die Ränder (3',3'',3''') der Persenning (3) mit verschnürbaren Ösen (3.5) gespannt werden können.

9. Vorrichtung nach den Anspüchen 1 bis 8, dadurch gekennzeichnet, dass zum Spannen der Persenning (3) Rollen und Flaschenzüge als Spannmittel (10) gebraucht werden.

## Claims

1. A device comprising a sewage treatment tank and a dividing wall which subdivides the sewage treatment tank into two chambers, characterized in that the dividing wall comprises at least one planar tarpaulin (3), tensioned in the manner of a drumhead, and means acting on the edge of the tarpaulin (3), and in that at least some edges of the tarpaulin have sealing tabs (3.6).

2. A device according to Claim 1, characterized in that the edge (3', 3'') of the tarpaulin (3) is provided with bar pockets (3.1', 3.1'') and the edge (3'' ') of the tarpaulin (3) is provided with a pole pocket (3.2).

3. A device according to Claim 1, characterized in that the bar pockets (3.1' , 3.1'') serve to receive the bars (4' ,4'') and the pole pocket (3.2) serves to receive a pole (7), and in that the bar pockets (3.1', 3.1'') and pole pockets (3.2) for attaching the tensioning means (10), cutouts are provided.

4. A device according to Claim 1, characterized in that the edges of the sealing tabs (3.6) are equipped with eyes (3.5) through which a tying means may be threaded.

5. A device according to Claim 1, characterized in that the tarpaulin (3) is subdivided at least once and has at least one casing seam (3.3) and a support (6) in the casing seam (3.3).

6. A device according to Claims 1 to 5, characterized in that the bar (4') is supported at its ends, and tensioning means (10) and tensioning tie rods (11) fasten the bar (4'') to the tank bottom (2') and the pole (7) to the tank wall (2'').

7. A device according to Claims 1 to 5, characterized in that the edges (3', 3'', 3'' ') of the tarpaulin (3) are provided with a bolt rope connection (3.4), and the bars (4), the support (6) and the pole (7) are provided with grooves for receiving the bolt rope connection (3.4).

8. A device according to Claims 1 to 5, characterized in that the edges (3', 3'', 3'' ') of the tarpaulin (3) can be tensioned by means of eyes (3.5) through which a tying means may be threaded.

9. A device according to Claims 1 to 8, characterized in that, to tension the tarpaulin (3), pulleys and lifting blocks are used as the tensioning means (10).

## Revendications

1. Dispositif constitué par un bassin d'épuration et une paroi de séparation qui subdivise le bassin d'épuration en deux cellules, caractérisé en ce que la paroi de séparation est constituée par au moins une toile à voile plane (3) tendue à la manière d'une peau de tambour et des moyens s'engageant sur le bord de la toile à voile (3) et en ce que les bords de la toile à voile présentent au moins partiellement des pattes d'étanchéité (3.6).

2. Dispositif selon la revendication 1, caractérisé en ce que le bord (3', 3'') de la toile à voile (3) est muni de poches formant poutre (3.1', 3.1'') et le bord (3''') de la toile à voile (3) est muni d'une poche formant mât.

3. Dispositif selon la revendication 1, caractérisé en ce que les poches formant poutre (3.1', 3.1'') pour recevoir les poutres (4', 4'') et la poche formant mât (3.2) pour recevoir un mât (7) et en ce que les poches formant poutre (3,1', 3.1'') et les poches formant mât (3.2) comportent des évidements destinés au raccordement des moyens de tension (10).

4. Dispositif selon la revendication 1, caractérisé en ce que les bords des pattes d'étanchéité (3.6) sont munis d'oeillets pour corde (3.5).

5. Dispositif selon la revendication 1, caractérisé en ce que la toile à voile (3) est subdivisée au moins en une fois et présente au moins un ourlet ajouré (3.3) et dans l'ourlet ajouré (3.3) comporte un support (6).

6. Dispositif selon les revendications 1 à 5, caractérisé en ce que la poutre (4') est supportée sur ses extrémités et en ce que la poutre (4'') vers le fond du bassin (2') et le mât (7) vers la paroi du bassin (2'') sont assujettis par des moyens de serrage (10) et d'ancrage (11).

7. Dispositif selon les revendications 1 à 5, caractérisé en ce que les bords (3', 3'', 3''') de la toile à voile (3) sont munis d'une liaison de fuite (3.4) et les traverses (4), le support (6) et le mât (7) pour le logement du raccordement de fuite (3.4) sont munis d'écrous.

8. Dispositif selon les revendications 1 à 5, caractérisé en ce que les bords (3', 3'', 3''') de la toile à voile (3) peuvent être tendus au moyen des oeillets à corde (3.5).

9. Dispositif selon les revendications 1 à 8, caractérisé en ce que pour tendre la toile à voile (3), on utilise des rouleaux et des poulies en tant que moyens de serrage (10).
